# EUROPEAN PATENT APPLICATION

(11) **EP 4 712 692 A1**
(43) Date of publication of application: **18.03.2026**
(21) Application number: 24803684.0
(22) Date of filing: 08.05.2024
(51) Int. Cl.: H05B 6/06, H05B 6/12

(54) **COOKING APPLIANCE AND OPERATION CONTROL METHOD THEREOF**

(30) Priority: 11.05.2023 KR 20230061294
(71) Applicant: LG Electronics Inc., Yeongdeungpo-gu Seoul 07336 (KR)
(72) Inventor: KWACK, Younghwan, Seoul 08592 (KR); SON, Seongho, Seoul 08592 (KR); JI, Jongseong, Seoul 08592 (KR)
(74) Representative: Vossius & Partner Patentanwälte Rechtsanwälte mbB
(86) International application number: PCT/KR2024/006122
(87) International publication number: WO 2024/232631

(57) **Abstract**

A cooking appliance is disclosed. The cooking appliance according to at least one of various embodiments of the present disclosure may comprise: a top plate part on which an object to be heated is placed; a plurality of working coils and ferrites which heat the object to be heated; a plurality of inverters which apply current to the working coils respectively; and a processor which controls the direction of a magnetic field generated by at least two neighboring working coils among the working coils.

## Description

### [Technical Field]

The present disclosure relates to a cooking appliance. More specifically, the present disclosure relates to a cooking appliance capable of heating both magnetic and non-magnetic materials and a method for controlling the operation thereof.

### [Background Art]

Various cooking appliances are used to heat food in homes and restaurants. Traditionally, gas ranges using gas as fuel have been widely used. However, recently, devices that heat objects, such as cooking vessels, using electricity instead of gas have become widespread.

Methods for heating objects using electricity are broadly categorized into resistance heating and induction heating. Resistance heating involves passing current through a metal resistance wire or a non-metallic heating element, such as silicon carbide, to heat the object (e.g., a cooking vessel) by transmitting the heat generated by the current to the object through radiation or conduction. Induction heating involves applying a predetermined amount of high-frequency power to a coil. This generates a magnetic field around the coil, generating eddy currents in the metal object being heated. This heats the object itself.

Recently, induction heating has been widely used in cooking appliances.

However, these cooking appliances have a limitation: their heating efficiency for non-magnetic vessels is significantly lower than that for magnetic vessels. To address this issue, cooking appliances incorporate an intermediate heating element to which eddy currents are applied, enabling the heating of non-magnetic materials (e.g., heat-resistant glass, ceramics, etc.).

However, when a cooking appliance includes an intermediate heating element, some of the magnetic field combines with the intermediate heating element before reaching the magnetic vessel, causing indirect heating. This reduces heating efficiency. Furthermore, controlling the heat output of the intermediate heating element requires additional coils or inverters, increasing costs and complicating the design and control process of the cooking appliance.

### [Disclosure of the Invention]

### [Technical Problem]

The present disclosure provides a cooking appliance capable of heating magnetic, non-magnetic, and non-metallic vessels, regardless of a material of vessel.

The present disclosure provides a cooking appliance that heats a heated object (vessel) located outside the heating area formed by a conventional working coil without the addition of a separate working coil, ferrite, inverter, etc., and a method for controlling the operation thereof.

The present disclosure provides a cooking appliance that identifiably indicates when an object located outside the heating area is heated, and a method for controlling the operation thereof.

### [Technical Solution]

A cooking appliance according to at least one of the various embodiments of the present disclosure may include: a top plate on which an object to be heated is placed; a plurality of working coils and ferrite configured to heat the object to be heated; a plurality of inverters configured to apply currents to the respective working coils; and a processor configured to control directions of magnetic fields generated by at least two adjacent working coils.

At this time, in a cooking appliance according to at least one of the various embodiments of the present disclosure, the processor may control the directions of magnetic fields generated by the at least two or more adjacent working coils such that the directions are opposite to each other.

In a cooking appliance according to at least one of the various embodiments of the present disclosure, the cooking appliance may comprise a heating area formed by the at least two working coils and a non-heating area not formed by the at least two working coils.

In a cooking appliance according to at least one of the various embodiments of the present disclosure, the plurality of working coils and ferrites may be shaped and arranged such that, when the directions of the magnetic fields are controlled to be opposite to each other, Req and Leq values in the non-heating area are increased.

In a cooking appliance according to at least one of the various embodiments of the present disclosure, the shape and arrangement of the plurality of working coils and ferrites may be controlled such that the Leq value does not exceed a threshold value.

In a cooking appliance according to at least one of the various embodiments of the present disclosure, a number of turns of each working coil may be adjusted at boundary portions between adjacent coils in order to increase the Req and Leq values.

In a cooking appliance according to at least one of the various embodiments of the present disclosure, a distance between the working coils may be adjusted in order to increase the Req and Leq values.

In a cooking appliance according to at least one of the various embodiments of the present disclosure, both a number of turns of each working coil at boundary portions and a distance between the working coils may be adjusted in order to increase the Req and Leq values.

In a cooking appliance according to at least one of the various embodiments of the present disclosure, the processor may be configured to detect, through a vessel detection sensor, whether the object to be heated is placed on the top plate.

In a cooking appliance according to at least one of the various embodiments of the present disclosure, wherein the processor may be configured to determine in which area the object to be heated is placed when the object is placed on the top plate.

In a cooking appliance according to at least one of the various embodiments of the present disclosure, the processor may be configured to determine whether the object to be heated is located in the non-heating area.

In a method for controlling the operation of a cooking appliance according to at least one of the various embodiments of the present disclosure, the method may include: detecting a cooking vessel; and, when the detected cooking vessel belongs to a second heating area that is not a first heating area formed by a plurality of working coils, transmitting a control signal such that a phase of a magnetic field generated by each of controlled working coils differs from a phase of a magnetic field generated by another adjacent working coil.

### [Effects of the Invention]

According to an embodiment of the present disclosure, the object to be heated can be adequately heated regardless of its size or location within the top plate.

According to an embodiment of the present disclosure, even if the object to be heated is in a non-heating area or a weak heating area, sufficient heating can be achieved without changing the shape or arrangement of a separate working coil or ferrite, and without adding an inverter.

### [Brief Description of Drawings]

FIG. 1 is a perspective view illustrating a cooking appliance according to an embodiment of the present disclosure.
FIG. 2 is a circuit diagram of a cooking appliance according to an embodiment of the present disclosure.
FIG. 3 is a circuit diagram of an inverter for a working coil of a cooking appliance according to an embodiment of the present disclosure.
FIG. 4 is a cross-sectional view illustrating a cooking appliance and a heated object according to an embodiment of the present disclosure.
FIG. 5 is a cross-sectional view illustrating a cooking appliance and a heated object according to another embodiment of the present disclosure.
FIG. 6 illustrates a cooking appliance comprising a plurality of working coils WCs according to an embodiment of the present disclosure.
FIG. 7 is a diagram illustrating a heating area and a weak heating area WHA according to an embodiment of the present disclosure.
FIG. 8 is a diagram illustrating a weak heating area WHA according to an embodiment of the present disclosure.
FIG. 9 is a diagram illustrating a worst weak heating area WWHA and a phase control method therefor according to an embodiment of the present disclosure.
FIG. 10 is a diagram illustrating differences in phase control effects when a small vessel is positioned according to each coil and ferrite type according to an embodiment of the present disclosure.
FIG. 11 is a cross-sectional view of a cooking appliance including an indicator according to an embodiment of the present disclosure.
FIG. 12 is a block diagram of a processor according to an embodiment of the present disclosure.
FIG. 13 is a flowchart illustrating a phase control method generated by a working coil according to one embodiment of the present disclosure.
FIG. 14 is a diagram illustrating a magnetic field control method for each coil selected corresponding to a weak heating area WHA according to the location of a vessel according to one embodiment of the present disclosure.

### [Best Mode]

Hereinafter, preferred embodiments of the present disclosure will be described in detail with reference to the accompanying drawings. In the drawings, the same reference numerals are used to indicate identical or similar components.

The suffixes "module" and "unit" used in the following description are assigned or used interchangeably solely for the sake of clarity and do not inherently have distinct meanings or roles.

In the following description, "connection" between components includes not only direct connection between components but also indirect connection through at least one other component, unless otherwise specified.

Hereinafter, a cooking appliance and an operating method thereof according to an embodiment of the present disclosure will be described. The cooking appliance in the present disclosure may be, but is not limited to, an induction heating cooktop.

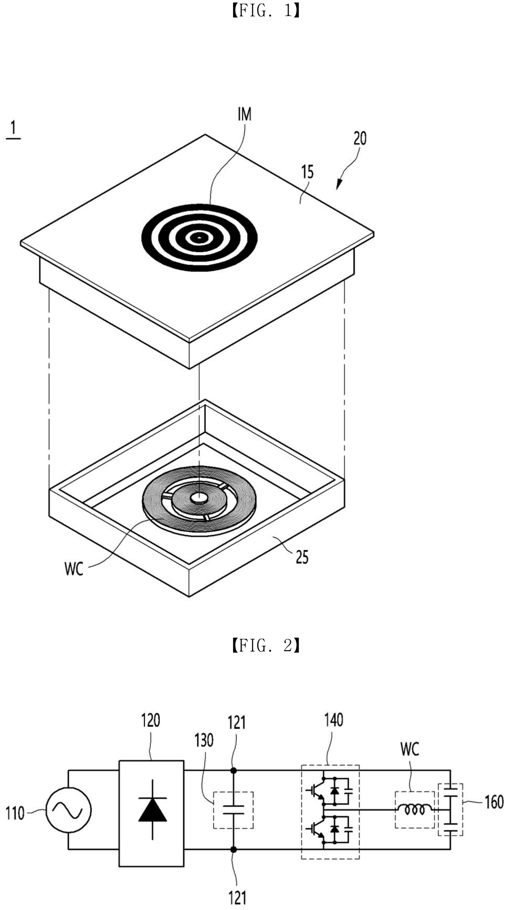

FIG. 1 is a perspective view illustrating a cooking appliance 1 according to an embodiment of the present disclosure.

Referring to FIG. 1, a cooking appliance 1 according to an embodiment of the present disclosure may include a case 25, a cover plate 20, and a working coil WC. The cooking appliance 1 may further include an intermediate heating body IM. However, the present disclosure is not limited thereto.

A working coil WC may be installed in the case 25.

In addition to the working coil WC, various devices related to driving the working coil WC may be installed in the case 25. The various devices may include, for example, at least one of a power supply unit (110, see FIG. 2) that provides AC power, a rectifier unit (120, see FIG. 2) that rectifies the AC power of the power supply unit into DC power, an inverter unit (140, see FIG. 2) that converts the DC power rectified by the rectifier into a resonant current through a switching operation and supplies it to a working coil WC, and a control module (not shown) that controls the operation of various devices within the cooking appliance 1.

The cover plate 20 is coupled to the upper end of the case 25, and may be provided with a top plate 15 on which a heated object (not shown), such as a cooking vessel, is placed on the upper surface.

The top plate 15 may be made of a glass material, such as ceramics glass, but this is merely an example. The material of the top plate 15 according to the embodiment of the present disclosure may vary.

In addition, the top panel 15 may be equipped with an input interface (not shown) that transmits user input to a control module (not shown) for the input interface. The input interface may be equipped at a location other than the top panel 15.

The input interface is a module for receiving user input, such as a desired heating intensity or the operating time of the cooking appliance 1, and may be implemented with a physical button or a touch panel. The input interface may further be equipped with a power button, a lock button, a power level adjustment button (+,-), a timer adjustment button (+,-), a charging mode button, etc. The control module for the input interface may transmit user input to the aforementioned control module (e.g., an inverter control module). The aforementioned control module may control the operation of various devices (e.g., a working coil WC) based on the user input, and thus, detailed descriptions thereof will be omitted.

The operating status of the working coil WC and the heating intensity (i.e., heating power) can be visually displayed on the top plate 15 in the shape of a burner. The burner shape can be displayed by an indicator (not shown) comprised of a plurality of light-emitting elements (e.g., LEDs) provided within the case 25.

The working coil WC is installed within the case 25 and can heat an object to be heated.

The operating status of the working coil WC can be controlled by the control module (not shown) described above. For example, when the object to be heated is placed on the top plate 15, the working coil WC can be driven by the control module.

The working coil WC can directly heat a magnetic object to be heated (i.e., a magnetic material) and indirectly heat a non-magnetic object to be heated (i.e., a non-magnetic material) via an intermediate heating body IM.

The working coil WC can heat the object to be heated by induction heating and can be installed to overlap the intermediate heating body IM in the vertical direction (i.e., vertically or vertically).

While FIG. 1 illustrates one working coil WC being installed in the case 25, this is not a limitation. That is, a plurality of working coils WC can be installed in the case 25. The intermediate heating body IM can be installed to correspond to the working coil WC.

The intermediate heating body IM can be installed in the upper plate 15. The intermediate heating body IM can be coated on the upper plate 15 to heat a non-magnetic material among the objects to be heated. The intermediate heating body IM can be inductively heated by the working coil WC.

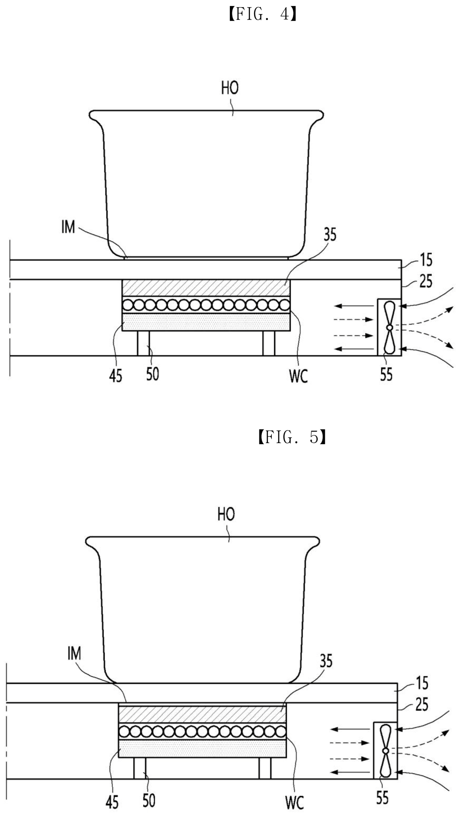

The intermediate heating body IM may be formed on the upper or lower surface of the upper plate 15. For example, the intermediate heating body IM may be installed on the upper surface of the upper plate 15, as illustrated in FIG. 4, or on the lower surface of the upper plate 15, as illustrated in FIG. 5.

The intermediate heating body IM may be arranged to overlap at least a portion of the working coil WC in the vertical direction (i.e., vertically or vertically). Therefore, the object to be heated can be heated regardless of the type or placement of the object via the working coil WC and the intermediate heating body IM.

The intermediate heating body IM may have at least one of magnetic and non-magnetic properties (i.e., magnetic, non-magnetic, or both magnetic and non-magnetic).

The intermediate heating body IM may be made of a conductive material, such as aluminum (Al), but is not limited thereto. In other words, the intermediate heating body IM may be made of a material other than a conductive material.

In FIG. 1, the intermediate heating body IM is illustrated as a shape in which a plurality of rings of different diameters are repeated, but this is not limited thereto and may have other shapes.

In FIGS. 1, 4, and 6, a single intermediate heating body IM is illustrated, but a plurality of intermediate heaters IM may be provided.

FIG. 2 is a circuit diagram of a cooking appliance 1 according to an embodiment of the present disclosure.

Referring to FIG. 2, the cooking appliance 1 may include some or all of a power supply unit 110, a rectifier unit 120, a DC link capacitor 130, an inverter unit 140, a working coil WC, and a resonance capacitor 160.

The power supply unit 110 can receive an external power source, for example, Alternating Current (AC) power, and supply an AC voltage to the rectifier unit 120.

The rectifier unit 120 is an electrical device that converts AC to DC. It converts the AC voltage supplied through the power supply unit 110 into DC voltage and supplies the converted voltage to both DC terminals 121.

The output terminal of the rectifier unit 120 can be connected to both DC terminals 121. The DC terminals 121 output through the rectifier unit 120 can be referred to as the "DC link." The voltage measured at both DC terminals 121 is referred to as the "DC link voltage."

The DC link capacitor 130 acts as a buffer between the power supply unit 110 and the inverter unit 140. Specifically, the DC link capacitor 130 can maintain the DC link voltage converted through the rectifier 120 and supply it to the inverter unit 140.

The inverter unit 140 can switch the voltage applied to the working coil WC so that a high-frequency current flows through the working coil WC. The inverter unit 140 can apply current to the working coil WC. The inverter unit 140 can include a relay or a semiconductor switch that turns on or off the working coil WC. The semiconductor switch can include an Insulated Gate Bipolar Transistor (IGBT) or a Wide Band GaN (WBG) element. The WBG element can include Silicon Carbide (SiC) or Gallium Nitride (GaN). The inverter unit 140 drives a semiconductor switch to cause a high-frequency current to flow through the working coil WC, thereby forming a high-frequency magnetic field in the working coil WC.

The working coil WC may include at least one working coil WC that generates a magnetic field for heating a object to be heated HO. The working coil WC may or may not have current flowing through it depending on whether the switching element is driven. When current flows through the working coil WC, a magnetic field is generated. The working coil WC generates a magnetic field according to the current flow, thereby heating the cooking appliance 1.

One end of the working coil WC may be connected to a connection point of the switching element of the inverter unit 140, and the other end may be connected to a resonant capacitor 160.

The driving of the switching element is performed by a driving unit (not shown), and the switching elements can be operated alternately by controlling the switching time output from the driving unit, thereby applying a high-frequency voltage to the working coil WC. In addition, since the on/off time of the switching element applied from the driving unit (not shown) is controlled in a gradually compensated manner, the voltage supplied to the working coil WC can change from a low voltage to a high voltage.

The resonant capacitor 160 can resonate with the working coil WC.

The resonant capacitor 160 may be a component that acts as a buffer. The resonant capacitor 160 controls the saturation voltage increase rate during the turn-off of the switching element, thereby affecting the energy loss during the turn-off time.

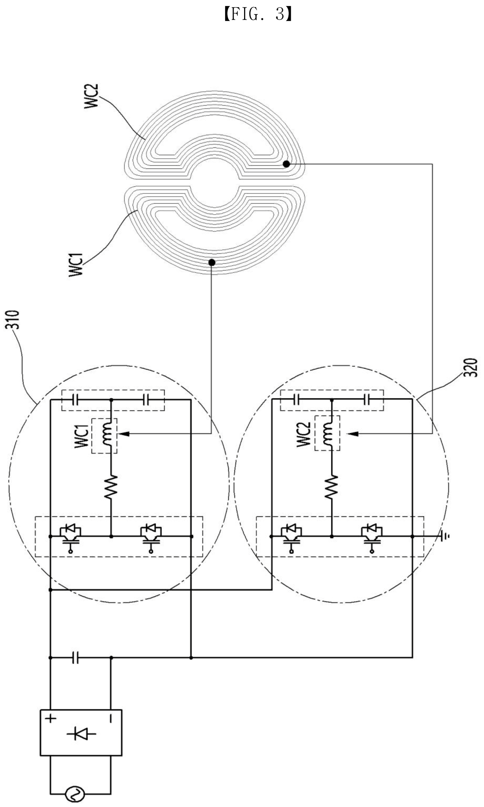

FIG. 3 is a circuit diagram of a cooking appliance 1 according to an embodiment of the present disclosure.

If FIG. 2 is a circuit diagram of a cooking appliance 1 that forms a single burner using a single working coil WC, FIG. 3 can be said to be a circuit diagram of a cooking appliance 1 that forms a single burner using two working coils WC1 and WC2.

Accordingly, in FIG. 2, a working coil drive unit for driving a single working coil WC may be provided for each working coil WC1, WC2 in FIG. 3. Here, the term "working coil drive unit" may be used to mean, for example, an inverter unit, a working coil, and a resonant capacitor. Meanwhile, the working coil drive unit may also include a resistor (R) between the inverter and the working coil.

Referring to FIG. 3, some circuits of the cooking appliance 1 may be shared for each working coil drive unit. Here, some circuits shared for each working coil driver may include, but are not limited to, a power supply unit 110, a rectifier unit 120, and a DC link capacitor 130.

Meanwhile, unlike the circuit illustrated in FIG. 3, the power supply unit 110, the rectifier unit 120, and the DC link capacitor 130 may be individually provided to each working coil driver.

The description of each component in FIG. 3 refers to the description above in FIG. 2 and will not be repeated herein.

FIG. 4 is a cross-sectional view illustrating a cooking appliance 1 and an object to be heated HO according to an embodiment of the present disclosure.

FIG. 5 is a cross-sectional view illustrating a cooking appliance 1 and an object to be heated HO according to another embodiment of the present disclosure.

Referring to FIGS. 4 and 5, the cooking appliance 1 may further include at least some or all of an insulating material 35, a shielding plate 45, a support member 50, and a cooling fan 55.

The insulating material 35 may be provided between the upper plate 15 and the working coil WC. Specifically, the insulating material 35 may be mounted beneath the upper plate 15, and the working coil WC may be arranged beneath it. The insulating material 35 may block heat generated when the intermediate heating body IM or the object to be heated HO is heated by the driving of the working coil WC from being transferred to the working coil WC. When the intermediate heating body IM or the object to be heated HO is heated by the electromagnetic induction of the working coil WC, the heat of the intermediate heating body IM or the object to be heated HO is transferred to the upper plate 15, and the heat of the upper plate 15 is then transferred back to the working coil WC, potentially damaging the working coil WC. The insulation 35 blocks the heat transferred to the working coil WC, thereby preventing the working coil WC from being damaged by heat and further preventing a deterioration in its heating performance.

Note that, although not a required component, a spacer (not shown) may be installed between the working coil WC and the insulation 35.

The spacer may be inserted between the working coil WC and the insulation 35 to prevent direct contact between the working coil WC and the insulation 35. Accordingly, the spacer can block the heat generated when the intermediate heating body IM or the object to be heated HO is heated by the driving of the working coil WC from being transferred to the working coil WC through the insulation 35.

Since the spacer can share the role of the insulation 35, the thickness of the insulation 35 can be minimized, thereby minimizing the gap between the object to be heated HO and the working coil WC.

Furthermore, a plurality of spacers may be provided, and the plurality of spacers may be spaced apart from each other between the working coil WC and the insulation 35. Air drawn into the case 25 by the cooling fan 55 can be guided to the working coil WC by the spacer. In other words, the spacer can improve the cooling efficiency of the working coil WC by guiding the air drawn into the case 25 by the cooling fan 55 to the working coil WC.

The shielding plate 45 is mounted below the working coil WC to block the magnetic field generated downward when the working coil WC is driven. The shielding plate 45 may be made of ferrite, but is not limited thereto. The shielding plate 45 may be supported upward by a support member 50.

The support member 50 may be installed between the lower surface of the shielding plate 45 and the lower plate of the case 25. The support member 50 can indirectly support the insulating material 35 and the working coil WC upward by supporting the shielding plate 45 upward, thereby ensuring that the insulating material 35 is in close contact with the top plate 15. As a result, the gap between the working coil WC and the object to be heated HO can be maintained at a constant level.

The support member 50 may include an elastic body, such as a spring, to support the shielding plate 45 upward, but is not limited thereto. Meanwhile, the support member 50 is not an essential component and may be omitted from the cooking appliance 1.

A cooling fan 55 may be installed inside the case 25 to cool the working coil WC. The cooling fan 55 may be installed on a side wall of the case 25. Alternatively, the cooling fan 55 may be installed at a location other than the side wall of the case 25. The cooling fan 55 may be driven under the control of the aforementioned control module, and as illustrated in FIGS. 4 and 5, may transfer air from outside the case 25 to the working coil WC or exhaust air (particularly, heat) inside the case 25 to the outside of the case 25. This enables efficient cooling of components inside the case 25 (particularly, the working coil WC). The air from outside the case 25 transferred to the working coil WC by the cooling fan 55 may be guided to the working coil WC by the spacer described above. This enables direct and efficient cooling of the working coil WC, thereby preventing thermal damage to the working coil WC and improving its durability.

The formation of a single crater using a single working coil WC or a plurality of working coils WCs has been described above. Hereinafter, the burner is described as a "heating area HA or heating region."

The heating area HA is typically formed on the top plate 15 corresponding to the vertical direction of the working coil WC. If an intermediate heating body IM is present, the heating area HA may also be formed on the top plate 15 corresponding to the intermediate heating body IM.

In this way, the heating area HA is typically fixed by the arrangement of the working coil WC or the intermediate heating body IM.

Recently, cooking appliances 1 have been evolving to increase the number of coils, thereby increasing the user's freedom in positioning the object to be heated HO, i.e., the vessel, on the top plate 15, and enabling heating regardless of the size of the vessel.

However, depending on the coil size, if a vessel smaller than a certain size is positioned within the heating area HA generated by the coil, the cooking appliance 1 may experience reduced heating performance or efficiency for the vessel, or may not be able to heat it at all.

To address this issue, methods such as reducing the coil size or increasing the number of coils can be considered. However, as the coil size decreases, the number of coils also increases. Furthermore, increasing the number of coils can lead to various problems, such as an increase in the number of inverters, connection between the coils and inverters, or increased control complexity of the inverters for coil control. In other words, changing the coil size can increase the size or positional freedom of the object to be heated HO, i.e., the vessel, on the top plate 15. However, this can also lead to various additional problems, such as increased configuration complexity of the cooking appliance 1, design difficulties, and increased unit costs.

Therefore, extensive research is being conducted on methods for expanding the heating area HA while maintaining the coil size within the cooking appliance 1 above a certain level.

The present disclosure discloses a method for preventing or improving the heating performance of a cooking appliance 1 in a non-heating area NHA, for example, an area where heating performance is reduced or impossible due to the location of a vessel smaller than a specific size or between coils, in response to the aforementioned heating area HA. The present disclosure excludes the use of an intermediate heating body IM in the non-heating area NHA, but is not necessarily limited thereto.

For convenience, the non-heating area NHA is defined arbitrarily to distinguish it from the heating area HA by the working coil WC, and does not necessarily represent an area that cannot be heated. For example, as described below, the non-heating area NHA may also include a weak heating area WHA with significantly reduced heating performance. Therefore, in the following description, the term "weak heating area WHA" is used to mean a non-heating area NHA where heating is impossible and a weak heating area where heating performance is significantly lower than that of the heating area HA.

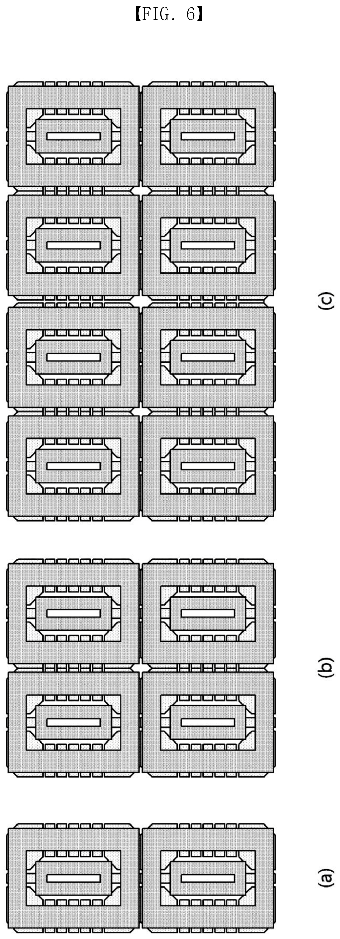

FIG. 6 illustrates a cooking appliance 1 comprising a plurality of working coils WCs according to an embodiment of the present disclosure.

Referring to FIG. 6, the configuration of a plurality of coils WCs forming the heating area of the cooking appliance 1 is illustrated.

In (a) of FIG. 6, a cooking appliance 1 composed of two working coils WC1 and WC2 is illustrated, in (b) of FIG. 6, a cooking appliance 1 composed of four working coils WC1-WC4, and in (c) of FIG. 6, a cooking appliance 1 composed of eight working coils WC1-WC8 is illustrated.

Referring to (a) to (c) of FIG. 6, as described above, a plurality of heating areas can be formed on the cooking appliance 1 depending on the number of working coils.

Although an inverter is not illustrated in FIG. 6, at least one working coil can be controlled by an inverter, and the cooking appliance 1 may be equipped with at least one inverter.

Hereinafter, a method for handling a case where a vessel is located in a weak heating area WHA that is not defined as a heating area on the cooking appliance 1 will be described.

Therefore, the cooking appliance 1 according to the present disclosure can heat and cook a vessel regardless of where the vessel is located on the top plate 15 (e.g., outside the heating area or within the weak heating area WHA) without the addition of a separate working coil.

In particular, the present disclosure discloses a method for handling the heating of a vessel located in a weak heating area WHA without the addition of a separate working coil. For example, the present disclosure may utilize a method for controlling the phase of the working coils for this purpose. Meanwhile, the shape of the working coil and the structure of the ferrite are also disclosed to maximize the phase control effect according to one embodiment of the present disclosure, but are not limited thereto.

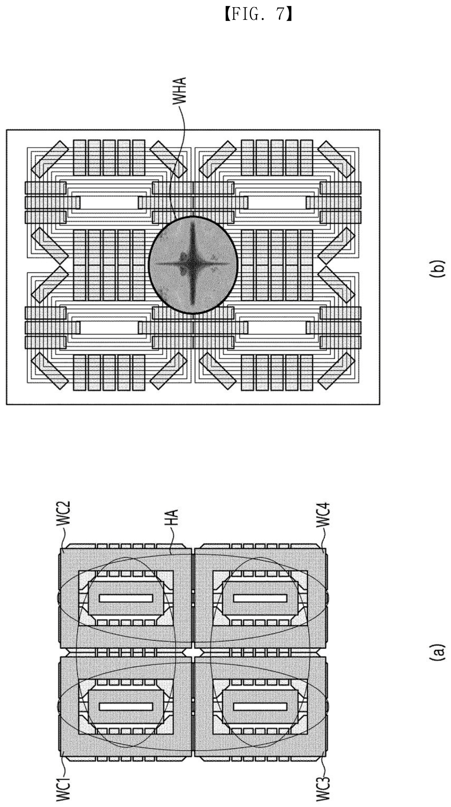

FIG. 7 discloses a heating area and a weak heating area WHA.

FIG. 7 discloses four working coils WC1-WC4 for convenience.

(a) of FIG. 7 discloses the heating area HAs, and (b) of FIG. 7 discloses the weak heating area WHA.

Referring to (a) of FIG. 7, a total of nine heating areas can be formed by the four working coils WC1-WC4. However, the present disclosure is not limited thereto. For example, the nine heating areas may include a total of four heating areas individually formed by each working coil, one heating area formed by all four working coils, and four heating areas formed by two working coils.

Referring to (b) of FIG. 7, a weak heating area WHA is formed at the center of the four working coils WC1-WC4. However, the present disclosure is not limited thereto. In other words, the number of weak heating areas WHA according to the four working coils WC1-WC4 is not necessarily one, and the weak heating area WHA illustrated in (b) of FIG. 7 may be, for example, an area with the lowest heating performance.

In (b) of FIG. 7, when a small vessel smaller than a certain size is positioned between four working coils, i.e., directly in the center, and the four coils operate at the same phase and frequency as before, a non-heatable area, i.e., a weak heating area WHA, may occur along the coil boundaries, as shown.

In this weak heating area WHA, the Req value observed when each working coil is coupled to the vessel is very low, making heating virtually impossible. Regarding this weak heating area WHA, each working coil may measure a Req value of, for example, 120 mΩ when coupled to the vessel, which, as described above, is considered a level at which it is virtually impossible to heat the vessel.

Therefore, the present disclosure discloses a technique for expanding the heating area of a small vessel positioned between coils, i.e., in the weak heating area WHA, and increasing the Req value observed when the working coil WC is coupled to the vessel.

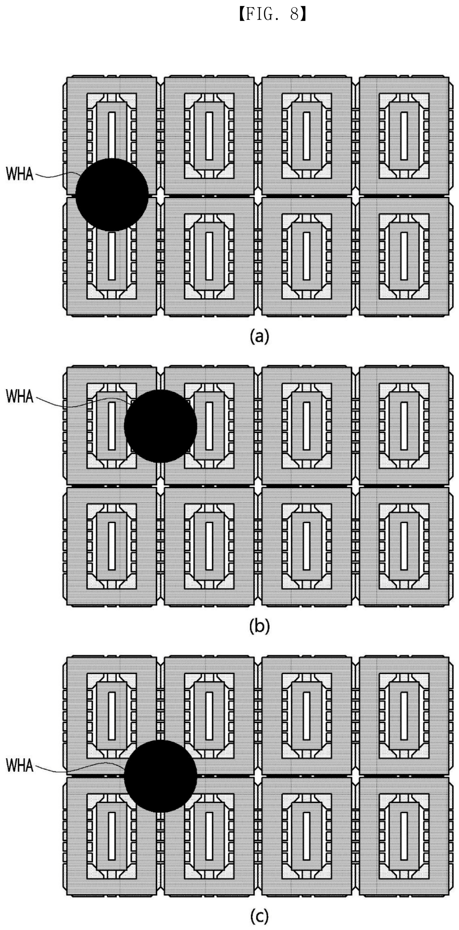

In addition to (b) of FIG. 7, FIG. 8 illustrates a weak heating area WHA related to the present disclosure.

In FIG. 8, eight working coils WCs are illustrated for convenience of explanation.

In (a) of FIG. 8, an object to be heated HO is positioned between the first and third working coils WC1 and WC3, in (b) of FIG. 8, an object to be heated HO is positioned between the first and second working coils WC1-WC2, and in (c) of FIG. 8, a weak heating area WHA according to the position of the object to be heated HO is illustrated between the first to fourth working coils WC1-WC4.

Among the weak heating areas WHAs as shown in (a) to (c) of FIG. 8, the case of (c) of FIG. 8 (or (b) of FIG. 7) may be the worst WHA WWHA. Hereinafter, the case of (a) of FIG. 8 will be described as an example, illustrating the shapes and control methods of the working coil and ferrite.

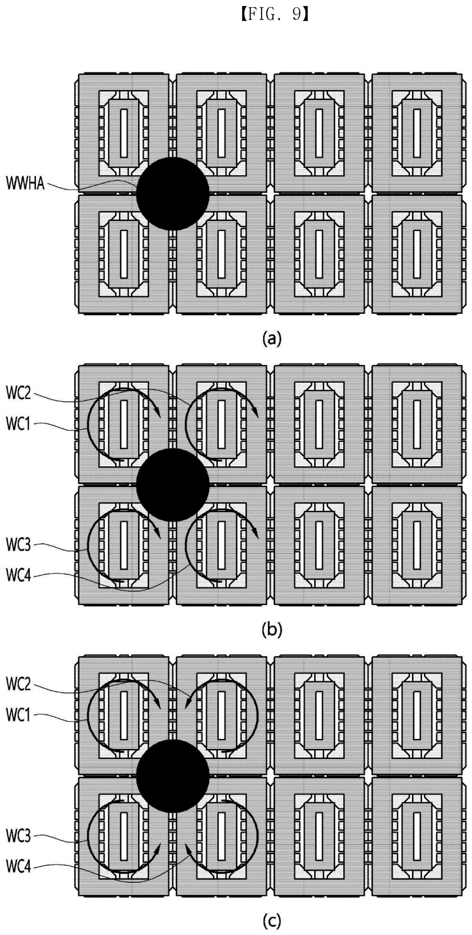

FIG. 9 illustrates the worst WHA and its phase control method.

(a) of FIG. 9 illustrates the worst WHA, (b) of FIG. 9 illustrates the first phase control method, and (c) of FIG. 9 illustrates the second phase control method.

Referring to (b) of FIG. 9, when the vessel is located between four working coils for the worst weak heating area WWHA, the reason why a weak heating area WHA is created based on the working coil boundary is that the magnetic fields generated by the working coils (e.g., between WC1 and WC2, between WC1 and WC3, between WC2 and WC4, and between WC3 and WC4) cancel each other out at the working coil boundary, and the current induced in the vessel by the magnetic field generated by each working coil cancels each other out at the working coil WC boundary, so that the heat generation is weakened at the working coil WC boundary area. In this respect, the case of (b) of FIG. 9 can be named a 'phase 0 degree control method.'

In the present disclosure, to address the issues associated with the aforementioned 0-degree phase control method, the phase between working coils WCs is varied to prevent the magnetic fields generated by the working coils WCs from canceling each other, thereby reducing the current cancellation phenomenon induced in the vessel and improving the heat dissipation performance of the vessel.

Thus, to maximize the effect of phase control of the magnetic fields generated between the working coils WCs according to the present disclosure, the design of the working coils WCs and the arrangement and design of the ferrite may be considered.

According to one example of the present disclosure, at the boundary between the working coils WCs, the working coils WCs are arranged closer together to ensure good coupling between the magnetic fields of each working coil, while the ferrite may be arranged as much as possible in the direction of the magnetic field.

For convenience of explanation, the present disclosure describes controlling the phase of four working coils WCs.

Referring to (c) of FIG. 9, the phase of four working coils WCs is controlled by 180 degrees. This will be described as a "phase 180 degrees control method" in contrast to the aforementioned "phase 0 degree control method." The phase 180 degrees control method can refer to controlling the phases between adjacent working coils (e.g., between WC1 and WC2, between WC1 and WC3, between WC2 and WC4, and between WC3 and WC4) to differ by 180 degrees.

Referring to (c) of FIG. 9, if the magnetic field by the first working coil WC1 acts in a clockwise direction, the magnetic fields by the adjacent second working coil WC2 and third working coil WC3 can be controlled to act in a counterclockwise direction, respectively.

In the above, the fourth working coil WC4 can also be controlled to have a clockwise direction so that the magnetic field generated by the corresponding working coil WC is 180 degrees out of phase with the adjacent second working coil WC2 and third working coil WC3.

Therefore, in (c) of FIG. 9, the magnetic fields generated by the first working coil WC1 and the fourth working coil WC4 are clockwise, and the magnetic fields generated by the second working coil WC2 and the third working coil WC3 are counterclockwise, so that each working coil WC can have a 180 degrees phase difference (i.e., opposite phase) with respect to the adjacent working coils WCs.

In this way, by controlling the phases generated by each of the four working coils WCs to be opposite to each other, the magnetic fields between the coils can have the effect of reinforcing rather than canceling each other out. This magnetic field reinforcement effect can ultimately lead to an increase in the heating area of the vessel within the cooking appliance 1 and an increase in Req.

Meanwhile, in this specification, controlling the direction, or phase, of the magnetic field by the working coils WCs can mean controlling the inverter INV. That is, in this disclosure, by controlling the inverter INV, the current induced in each working coil WC, or eddy current, can be controlled, and the phase of the magnetic field formed by such eddy current can be controlled.

Thus, in this disclosure, heating performance, etc., can be improved or enhanced through a phase control method of the existing working coils without the addition of a separate working coil or inverter INV, in relation to the weak heating area WHA or the worst weak heating area WWHA.

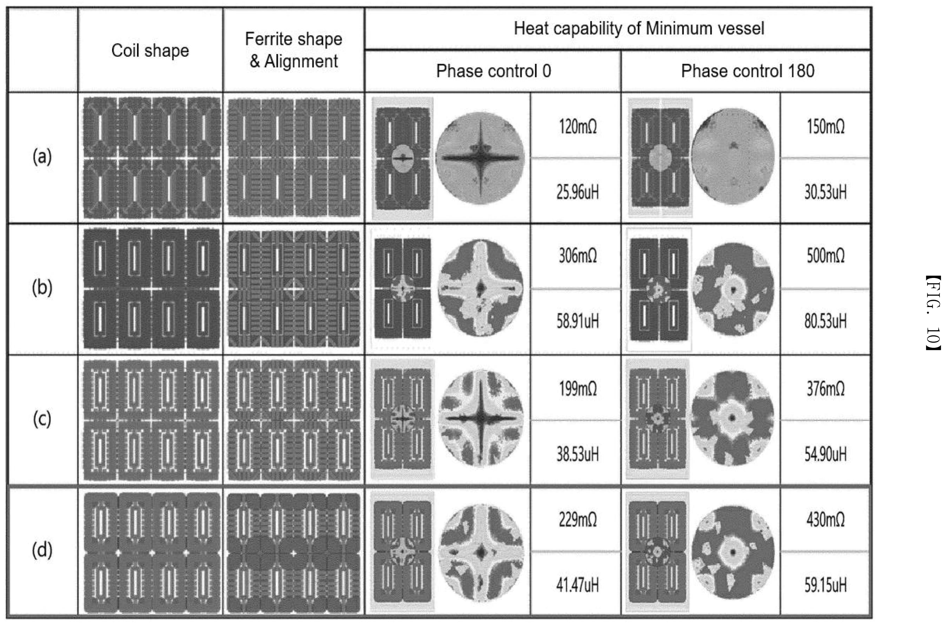

A table is provided in FIG. 10 to illustrate the difference in phase control effects when a small vessel is positioned according to each coil and ferrite type.

In (a) to (d) of FIG. 10, various coil shapes and ferrite shapes and arrangements, and present experimental results for the heating performance of a specific vessel (e.g., a minimum vessel with a diameter of 120 mm, but not limited thereto) are illustrated.

Regarding heating performance, the experimental results and differences in heating area according to the aforementioned 0-degree phase control method and 180-degree phase control method are illustrated so that they can be visually confirmed.

In each case of (a) to (d) of FIG. 10, the differences in vessel heating area according to the 0-degree phase control method and the 180-degree phase control method can be confirmed. It can be seen that when the phase is controlled at 180 degrees according to the present disclosure, the Req and Leq values increase significantly relative to when the phase is controlled at 0 degrees.

In (a) of FIG. 10, Req is 120 mΩ and Leq is 25.96 uH under the 0-degree phase control method, while Req is 150 mΩ and Leq is 30.53 uH under the 180-degree phase control method.

However, (a) of FIG. 10 illustrates that although heating performance is improved under the 180-degree phase control method compared to the 0-degree phase control method, it is still insufficient when compared to the heating performance required for the weak heating area WHA or WWHA.

On the other hand, in (b) to (d) of FIG. 10, heating performance is relatively significantly improved compared to (a) of FIG. 10.

(b) of FIG. 10 illustrates that Req is 306 mΩ and Leq is 58.91 uH when the phase is 0 degrees controlled, while Req is 500 mΩ and Leq is 80.53 uH when the phase is 180 degrees controlled.

(c) of FIG. 10 illustrates that Req is 199 mΩ and Leq is 38.53 uH when the phase is 0 degrees controlled, while Req is 376 mΩ and Leq is 54.90 uH when the phase is 180 degrees controlled.

As shown in (d) of FIG. 10, when the phase control method is 0 degrees, Req is 229 mΩ and Leq is 41.47 uH, whereas when the phase control method is 180 degrees, Req is 430 mΩ and Leq is 59.15 uH.

As shown in (d) of FIG. 10, when the ferrite shape and arrangement are modified and the coil shape is modified to maximize the phase effect according to an embodiment of the present disclosure, when the phase of the magnetic field generated by the working coil WC is controlled to 180 degrees instead of 0 degrees, it can be seen that the Req value increases by, for example, 87% or more.

Meanwhile, in the case of (b) of FIG. 10, although the Req value is greater than in the case of (d) of FIG. 10 when the phase of the magnetic field generated by the working coil is controlled by 180 degrees, the Leq value may become too high and cause problems when controlling the inverter INV. Regarding the increase in the Req and Leq values, it can be seen that the case of (b) of FIG. 10 requires a more complex coil shape and ferrite arrangement than the case of (d) of FIG. 10. Therefore, it can be interpreted that the case of (d) of FIG. 10 is relatively superior to the case of (b) of FIG. 10 in terms of performance, coil shape, and ferrite arrangement. However, this is not necessarily limited thereto.

That is, FIG. 10 is merely one embodiment, and designers can design various configurations depending on the selection of the inverter and heating performance.

In order to maximize the phase control effect according to the present disclosure, increasing the number of coil turns and arranging a large amount of ferrite at the working coil boundary (e.g., as in (b) of FIG. 10) strengthens the magnetic field superposition effect, but conversely, the changes in Req and Leq due to phase control become larger, which may make control difficult. Therefore, the degree of phase control effect may be adjusted by adjusting the number of coil turns at the coil boundary or the distance between coils.

The shape and arrangement of the plurality of working coils WCs and ferrite may be determined so that the Req and Leq values in the weak heating area WHA increase when the directions of the magnetic fields are controlled to be opposite to each other. In this case, in particular, the shape and arrangement of the plurality of working coils WCs and ferrite may be controlled so that the Leq value does not exceed a critical value.

In relation to this, to increase the Req and Leq values, the number of coil turns at the boundary of each working coil may be adjusted, the distance between each working coil may be adjusted, and both the number of coil turns at the boundary of each working coil and the distance between each working coil may be adjusted together.

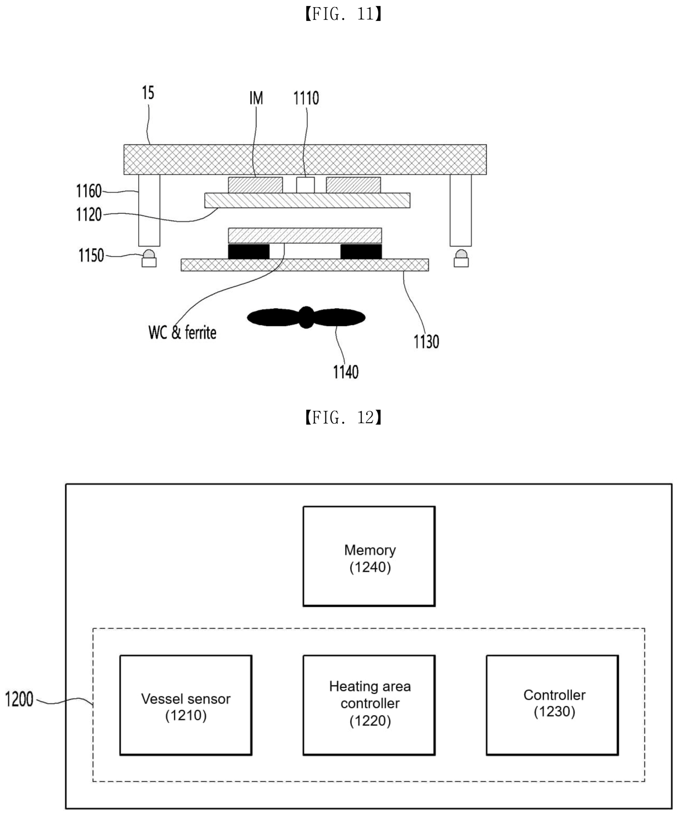

FIG. 11 illustrates a cross-sectional view of a cooking appliance 1 including an indicator according to an embodiment of the present disclosure.

FIG. 12 is a block diagram of a processor 1100 according to an embodiment of the present disclosure.

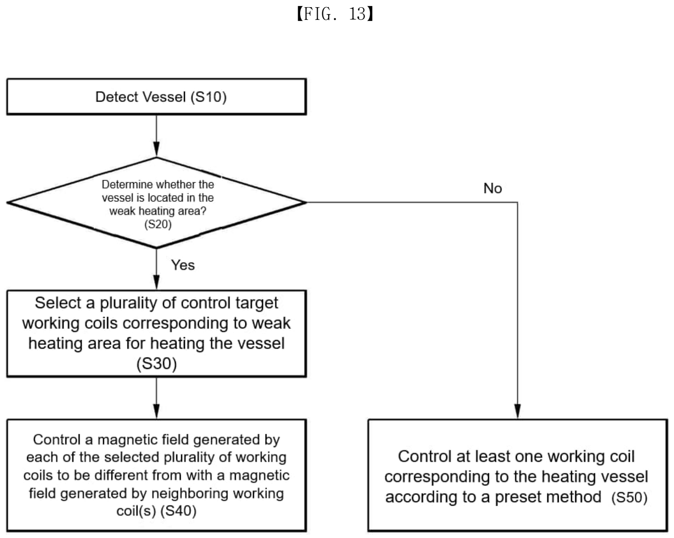

FIG. 13 is a flowchart illustrating a phase control method generated by a working coil WC according to an embodiment of the present disclosure.

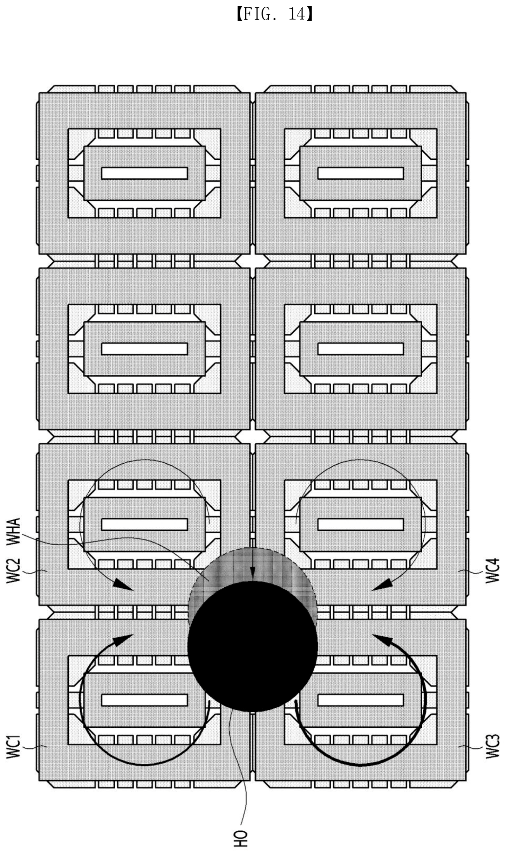

FIG. 14 is a diagram illustrating a magnetic field control method for each coil WC selected corresponding to a weak heating area WHA according to the position of a vessel according to an embodiment of the present disclosure.

Referring to FIG. 11, a cross-sectional view of a cooking appliance 1 may be shown in which an intermediate heating body IM and a sensor unit 1110 are positioned below the top plate 15, and an insulator 1120 may be positioned below the intermediate heating body IM. The sensor unit 1110 may include a temperature sensor, a vessel detection sensor, and the like.

A working coil and ferrite WC & ferrite may be positioned below the insulator 1120, a plate 1130 may be positioned below the intermediate heating element, and a fan 1140 may be positioned at the lowest portion. The plate 1130 may include an aluminum (Al) plate.

The indicator according to the present disclosure may be positioned at both ends, i.e., the left end and the right end, respectively, in the cross-sectional view.

The indicator may include an LED element 1150 and a diffuser plate 1160 to identify a weak heating area WHA according to the present disclosure.

The LED element 1150 may be implemented as a single light-emitting element or in an array form. As illustrated in FIG. 18, when the LED element 1150 is implemented in an array form, at least two or more light-emitting elements may form a group, and the light-emitting elements may be controlled individually or as a group.

The LED element 1150 may be positioned at a predetermined position within the lower portion of the top plate 15, and a diffuser plate 1160 may be positioned above the LED element 1150 and extend to the lower portion of the top plate 15. Accordingly, light emitted from the LED element 1150 may be recognized through the diffuser plate 1160 and through the top plate 15.

In the cross-sectional view of FIG. 11, the LED element 1150 is depicted as being positioned below the insulation 1120 and at the same depth as or above the plate 1140, but this is not limited thereto.

Meanwhile, the LED element formed at one end may be a single light-emitting element, and the LED element formed at the other end may be in the form of an LED array.

Referring to FIG. 12, the cooking appliance 1 may include a memory 1240 and a processor 1200.

The processor 1200 may perform a controller function that actually controls the overall cooking appliance 1.

Referring to FIG. 12, the processor 1200 may include a vessel sensor 1210, a heating area controller 1220, and a controller 1230.

The vessel sensor 1210 may detect a vessel using the sensor unit 1110 of FIG. 11, i.e., the vessel detection sensor.

The vessel sensor 1210 may also obtain data regarding the position of the vessel on the top plate 15 detected by the vessel detection sensor 1110.

The heating area controller 1220 may conveniently perform control of both the heating area HA and the weak heating area WHA. For example, the heating area controller 1220 may control the inverter INV so that the phases of at least two working coils WCs associated with the weak heating area WHA are opposite to each other, i.e., 180 degrees, with respect to the weak heating area WHA.

The controller 1230 may monitor, manage, and control the overall operation of the processor 1200 and the cooking appliance 1.

In addition, the processor 1200 or the controller 1230 may be controlled to perform the operations of FIG. 13.

The memory 1240 may store various data, such as identification information and control information for the heating area HA and the weak heating area WHA, including various software, such as data processed by the processor 1200 and programs embedded during manufacturing.

In FIG. 13, for convenience, the operation of a cooking appliance 1 that controls the heating performance of a vessel located in a weak heating area WHA is described, using a processor 1200 as an example.

At step S10, the processor 1200 can detect a vessel located on the top plate 15. At this time, the processor 1200 can identify the location of the vessel on the top plate 150.

At step S20, the processor 1200 can determine whether the detected vessel is located in the weak heating area WHA.

At step S30, if the processor 1200 determines that the vessel is located in the weak heating area WHA, the processor 1200 can select a plurality of control target working coils WCs corresponding to the corresponding weak heating area WHA for heating the vessel.

In step S40, the processor 1200 may control the magnetic field generated by each of the plurality of selected controllable working coils WC to be out of phase with the magnetic field generated by the neighboring working coil WC.

Here, 'out of phase' may refer to a phase difference of 180 degrees.

In step S50, if the processor 1200 determines that the vessel detected in step S20 is not located in the weak heating area WHA, the processor 1200 may identify the heating area and control the identified heating area according to a preset method.

Meanwhile, in relation to step S20, when determining whether the vessel belongs to the weak heating area WHA, if the degree of overlap (i.e., the range of the overlapping area) between the vessel and the predefined weak heating area WHA is greater than or equal to a preset threshold, the processor 1200 may determine that the vessel belongs to the weak heating area WHA, and if not, may determine that it does not belong to the weak heating area WHA.

In addition, as illustrated in FIG. 14, even if the vessel is determined to be located in the weak heating area WHA, if the overlap is not 100%, the processor 1200 may control the magnetic field control for each coil selected corresponding to the weak heating area WHA to be different depending on the location of the vessel.

That is, in FIG. 14, the processor 1200 may control the strength of the magnetic field of the vessel HO placed at a position relatively shifted horizontally to the left in the weak heating area WHA (i.e., a position closer to the first working coil WC1 and the third working coil WC3) to be stronger relative to the first working coil WC1 and the third working coil WC3 than to the second working coil WC2 or the fourth working coil WC4.

The processor 1200 may control the vessel by transmitting a control signal so that the phase of the magnetic field generated by each working coil WC to be controlled and the phase of the magnetic field generated by the other adjacent working coils WC are different from each other when the detected vessel belongs to the second heating area rather than the first heating area formed by the plurality of working coils WCs. In the above, the second heating area may represent a non-heating area NHA or a weak heating area WHA.

The above description merely exemplifies the technical concept of the present disclosure. Those skilled in the art will appreciate that various modifications and variations can be made without departing from the essential characteristics of the present disclosure.

Therefore, the embodiments disclosed in this disclosure are intended to illustrate, rather than limit, the technical concept of the present disclosure, and the scope of the technical concept of the present disclosure is not limited by these embodiments.

The scope of protection of the present disclosure should be interpreted by the following claims, and all technical concepts within the scope equivalent thereto should be construed as being included within the scope of the present disclosure.

### [Industrial Applicability]

The present disclosure relates to a cooking appliance and includes a method for enabling the cooking appliance to operate not only when the object to be heated is a magnetic material but also a non-magnetic material, thereby demonstrating industrial applicability.

## Claims

1. A cooking appliance comprising:
a top plate on which an object to be heated is placed;
a plurality of working coils and ferrites configured to heat the object to be heated;
a plurality of inverters configured to apply currents to the respective working coils; and
a processor configured to control directions of magnetic fields generated by at least two adjacent working coils.

2. The cooking appliance of claim 1, wherein the processor is configured to control the directions of the magnetic fields generated by the at least two adjacent working coils such that the directions are opposite to each other.

3. The cooking appliance of claim 2, wherein the cooking appliance comprises a heating area formed by the at least two working coils and a non-heating area not formed by the at least two working coils.

4. The cooking appliance of claim 3, wherein the plurality of working coils and ferrites are shaped and arranged such that, when the directions of the magnetic fields are controlled to be opposite to each other, Req and Leq values in the non-heating area are increased.

5. The cooking appliance of claim 4, wherein the shape and arrangement of the plurality of working coils and ferrites are controlled such that the Leq value does not exceed a threshold value.

6. The cooking appliance of claim 4, wherein a number of turns of each working coil is adjusted at boundary portions between adjacent coils in order to increase the Req and Leq values.

7. The cooking appliance of claim 4, wherein a distance between the working coils is adjusted in order to increase the Req and Leq values.

8. The cooking appliance of claim 4, wherein both a number of turns of each working coil at boundary portions and a distance between the working coils are adjusted in order to increase the Req and Leq values.

9. The cooking appliance of claim 3, wherein the processor is configured to detect, through a vessel detection sensor, whether the object to be heated is placed on the top plate.

10. The cooking appliance of claim 9, wherein the processor is configured to determine in which area the object to be heated is placed when the object is placed on the top plate.

11. The cooking appliance of claim 10, wherein the processor is configured to determine whether the object to be heated is located in the non-heating area.

12. A method of controlling operation of a cooking appliance, the method comprising:
detecting a cooking vessel; and
when the detected cooking vessel belongs to a second heating area that is not a first heating area formed by a plurality of working coils, transmitting a control signal such that a phase of a magnetic field generated by each of controlled working coils differs from a phase of a magnetic field generated by another adjacent working coil.
